# EUROPEAN PATENT APPLICATION

(11) **EP 4 372 582 A1**
(43) Date of publication of application: **22.05.2024**
(21) Application number: 21954621.5
(22) Date of filing: 27.08.2021
(51) Int. Cl.: G06F 16/36

(54) **KNOWLEDGE GRAPH GENERATION METHOD AND APPARATUS AND COMPUTER READABLE MEDIUM**

(71) Applicant: Siemens Aktiengesellschaft, 80333 München (DE)
(72) Inventor: ZHAO, Fang, Beijing 100012 (CN)
(74) Representative: Isarpatent
(86) International application number: PCT/CN2021/115120
(87) International publication number: WO 2023/024098

(57) **Abstract**

A knowledge graph generation method and apparatus and a computer readable medium. The method comprises: obtaining (S201) a picture of a target system; performing (S202) target recognition on the picture to obtain the class of objects in the target system and the position information of the objects in the picture; determining (S203) a relative positional relationship among the objects in the target system according to the position information of the objects in the picture; and generating (S204) a knowledge graph of the target system according to the relative positional relationship and the recognized class of the objects. Accurate information on the objects in the target system and the relative relationship can be obtained quickly to automatically generate a knowledge graph.

## Description

### Technical field

Embodiments of the present invention relate to the technical field of computers, in particular to a method and apparatus for generating a knowledge graph, and a computer readable medium.

### Background art

As science and technology develop, there is an urgent need to digitize traditional factories. The key to digital transformation is breaking through barriers between data formats of different kinds, collecting various types of information to establish comprehensive knowledge graphs (KG), as this can make the production capacity of factories more transparent and improve management efficiency. However, in the process of creating KGs, factories in different fields differ hugely in terms of production lines and equipment, so it is very difficult to have a universal method that is able to create knowledge graphs for different factories quickly.

Tanking production line information acquisition as an example, there are generally two methods in real applications: firstly, manual input, and secondly, information extraction from different data sources. If the production line is large and complex, manual input requires a large amount of time, and has a high manpower cost. Moreover, since different data sources have different data formats, with diverse types of information (e.g. including information such as images and tables), existing techniques and solutions struggle to extract accurate information quickly.

### Summary of the invention

Embodiments of the present invention provide a method and apparatus for generating a knowledge graph, and a computer readable medium, which can quickly acquire accurate information about objects and relationships in a target system, in order to generate a knowledge graph automatically.

In a first aspect, a method for generating a knowledge graph is provided. In the method, an image of a target system is acquired; the image is subjected to target identification to obtain a category of each object in the target system and position information of each object in the image; a relative positional relationship between objects in the target system is determined according to the position information of each object in the image; a knowledge graph of the target system is generated according to the relative positional relationship and the category of each object identified.

In a second aspect, an apparatus is provided, comprising modules for performing the steps in the method provided in the first aspect.

In a third aspect, an apparatus is provided, comprising: at least one memory, configured to store computer readable code; and at least one processor, configured to call the computer readable code, and perform the steps in the method provided in the first aspect.

In a fourth aspect, a computer readable medium is provided, the computer readable medium having stored thereon computer readable code which, when executed by a processor, causes the processor to perform the steps in the method provided in the first aspect.

In a fifth aspect, a computer program product is provided, comprising computer readable code which, when executed by a processor, realizes the steps in the method provided in the first aspect.

In embodiments of the present invention, a knowledge graph is generated automatically on the basis of computer vision technology, wherein object categories in the target system and relative positional relationships between objects are determined by target identification, and on this basis a knowledge graph is generated automatically; thus, embodiments of the present invention have the advantages of accurate information acquisition and an efficient generating process.

In any of the above aspects, optionally, when generating a knowledge graph of the target system according to the relative positional relationship and the category of each object identified, the categories of the objects identified are determined as being entities in a knowledge graph of the target system; a relationship between entities in the knowledge graph corresponding to objects in the target system is determined according to the relative positional relationship between objects; and the knowledge graph of the target system is generated according to the entities in the knowledge graph of the target system and the relationship between the entities. Here, the categories of objects obtained by target identification are used as entities in the knowledge graph, and relationships between entities in the knowledge graph are determined according to relative positional relationships between objects, thus ingeniously applying the result of the target system to generation of the knowledge graph, and using the method of target identification to solve the problem of natural language processing.

In any of the above aspects, optionally, common knowledge of a relationship between the identified objects may also be acquired; and the step of determining a relationship between entities in a knowledge graph corresponding to objects in the target system according to the relative positional relationship between objects, comprises: determining a relationship between entities in the knowledge graph according to the relative positional relationship between identified objects and the acquired common knowledge. Here, reference is made to common knowledge to further determine relationships between entities, such that the information content of the generated knowledge graph is more precise.

In any of the above aspects, optionally, the target system is a factory, a production line or a processing step. Of course, the target system is not limited to the field of industry, and could also be a system in another technical field.

### Brief description of the drawings

Fig. 1 is a structural schematic drawing of an apparatus for generating a knowledge graph as provided in an embodiment of the present invention.
Fig. 2 is a flow chart of a method for generating a knowledge graph as provided in an embodiment of the present invention.
Fig. 3 shows the process of generating a knowledge graph in an embodiment.
Fig. 4 shows the process of subjecting an image of a target system to target identification in an embodiment.
Fig. 5 shows the process of determining relationships between entities in a knowledge graph of a target system in an embodiment.

### Key to the drawings:

10: apparatus for generating a knowledge graph
101: memory 102: processor 103: communication module
11: program for generating a knowledge graph
111: image acquisition module
112: target identification module
113: positional relationship determining module
114: knowledge graph generating module
1142: entity relationship determining unit
1141: knowledge graph generating unit
115: common knowledge acquisition module
200: method for generating a knowledge graph
S201 - S205: method steps
20: image
31: category of each object in target system obtained by target identification
32: information on the position, in image 20, of each object in the target system, obtained for the target system
42: relative positional relationship between objects in target system
42': relationship between entities in knowledge graph of target system
50: knowledge graph of target system
60: common knowledge

### Detailed description of the invention

The subject matter described herein will now be discussed with reference to exemplary embodiments. It should be understood that these embodiments are discussed for the sole purpose of enabling those skilled in the art to better understand and thereby implement the subject matter described herein, without limiting the protection scope, applicability or examples expounded in the claims. Changes may be made to the functions and arrangement of the discussed elements without departing from the scope of protection of the content of embodiments of the present invention. Various processes or components may be omitted, replaced or added in the examples as needed. For example, the described method may be performed in a different order from that described, and various steps may be added, omitted or combined. Furthermore, features described in relation to some examples may also be combined in other examples.

As used herein, the term "comprising" and variants thereof denote open terms, meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions, explicit or implicit, may be included below. Unless clearly specified in the context, the definition of a term is the same throughout this Description.

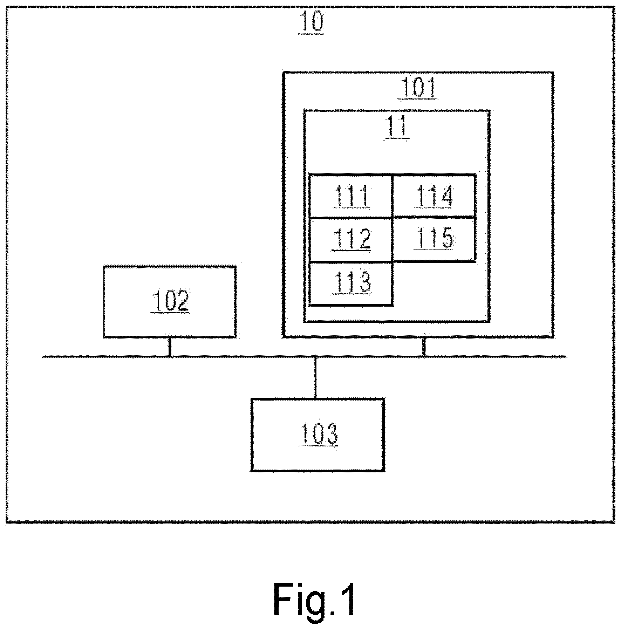

Embodiments of the present invention are explained in detail below with reference to Figs. 1 to 5.

Fig. 1 is a structural schematic drawing of an apparatus for generating a knowledge graph as provided in an embodiment of the present invention. The apparatus 10 for generating a knowledge graph may be realized as a network of computer processors, to perform the method 200 for generating a knowledge graph in embodiments of the present invention, or may be a single computer, a single-chip microcomputer or a processing chip as shown in Fig. 1, comprising at least one memory 101, which comprises a computer readable medium, e.g. random access memory (RAM). The apparatus 10 further comprises at least one processor 102 coupled to the at least one memory 101. Computer executable code is stored in the at least one memory 101, and when executed by the at least one processor 102, can cause the at least one processor 102 to perform the steps described herein.

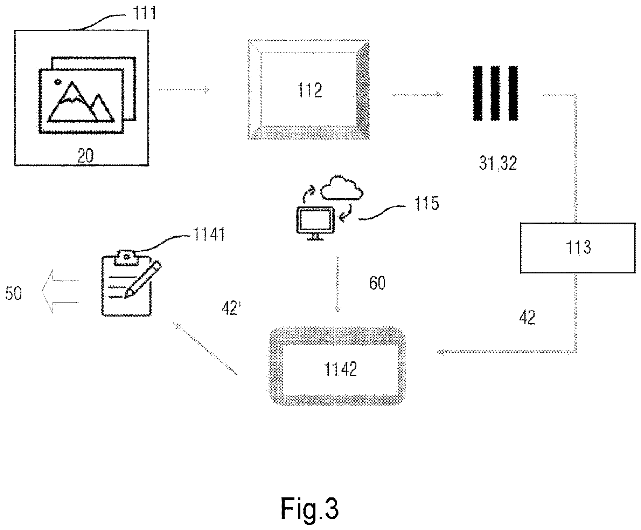

The at least one memory 101 shown in Fig. 1 may comprise a program 11 for generating a knowledge graph, such that the at least one processor 102 performs the method 200 for generating a knowledge graph as described in embodiments of the present invention. As shown in Fig. 1, the program 11 for generating a knowledge graph may comprise: an image acquisition module 111, a target identification module 112, a positional relationship determining module 113 and a knowledge graph generating module 114. As shown in Fig. 3, the operations performed by each module are as follows:
- The image acquisition module 111 is configured to acquire an image 20 of a target system, wherein the target system may be a factory, a production line or a process step, as well as any part of an industrial system. Of course, the target system may also be a system other than an industrial system, or a constituent part thereof.
- The target identification module 112 is configured to subject the image 20 to target identification to obtain a category 31 of each object in the target system and position information 32 of each object in the image 20.
- The positional relationship determining module 113 is configured to determine a relative positional relationship 42 between objects in the target system according to the position information 32 of each object in the image. The relative positional relationship 42 includes but is not limited to: information on angles between objects, distance between center points of candidate regions (bounding boxes) of identified objects, relationship between position points of candidate regions of identified objects, size of overlap region between candidate regions, relative positional relationship between overlap regions, etc. Since lenses photograph target systems at different angles, the proportional relationship between objects, etc. might not agree with reality; as the relative positional relationship 42 includes various types of position information, feature variables can be extracted according to different business requirements, to finally obtain a relatively accurate relationship between objects.
- The knowledge graph generating module 114 is configured to generate a knowledge graph 50 of the target system according to the relative positional relationship 42 and the category 31 of each object identified.

The knowledge graph generating module 114 may comprise: an entity relationship determining unit 1142 and a knowledge graph generating unit 1141. The entity relationship determining unit 1142 may determine a relationship 42' between entities in a knowledge graph corresponding to objects in the target system according to the relative positional relationship 42 between objects, and the knowledge graph generating unit 1141 may determine the categories 31 of the objects identified as being entities in a knowledge graph of the target system, and generate the knowledge graph 50 of the target system according to the entities in the knowledge graph of the target system and the relationship 42' between the entities.

Optionally, the apparatus 10 may further comprise a common knowledge acquisition module 115, configured to acquire common knowledge 60 of a relationship between the identified objects, as an input for the entity relationship determining unit 1142. The entity relationship determining unit 1142 may determine the relationship 42' between entities in the knowledge graph according to the relative positional relationship 42 between identified objects and the common knowledge 60.

In the course of processing in the positional relationship determining module 113 and the entity relationship determining unit 1142, the category 31 of each object may also serve as an input, helping to determine the relationship between objects.

In embodiments of the present invention, entity identification and knowledge graph generation are no longer regarded as two independent problems from a traditional perspective. On the contrary, in the process of generating the knowledge graph, relationships between entities are acquired at the same time as entity information is acquired, so as to automatically generate the knowledge graph. Firstly, target identification technology in computer vision is used to identify entities in an image or video, then relationships between entities are determined according to relative positional relationships between detected objects in the image, and optionally, common knowledge is also used to further determine relationships between entities. Next, a table may be generated that comprises entity pairs as well as relationships between entities in the entity pairs, and finally the knowledge graph is generated automatically on the basis of the table. In embodiments of the present invention, it is only necessary to input an image, and this ingeniously avoids the difficulty of extracting entity information from different data sources. The entire process can be completed automatically, significantly reducing human participation, greatly increasing the efficiency of knowledge graph generation, and reducing the financial cost.

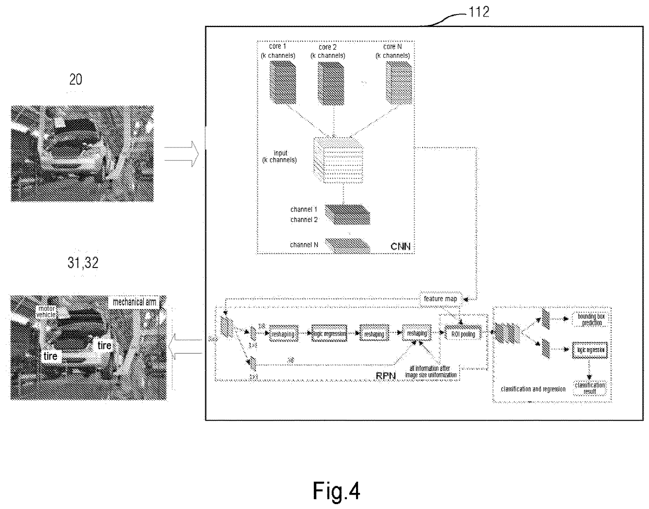

The detailed operations performed by the target identification module 112 in an embodiment of the present invention are explained below with reference to Fig. 4. In this embodiment, the target system is a production line in a motor vehicle manufacturing plant, wherein Faster Regions with CNN features (Faster-RCNN) may be chosen as the target identification model used by the target identification module 112.

As shown in Fig. 4, each object in the image 20 captured in the course of everyday operation and maintenance of the production line can be identified by the target identification module 112. The image 20 comprises a motor vehicle, two tires, a motor vehicle logo and a mechanical arm. Faster-RCNN may comprise four parts. A convolutional neural network (CNN) is used to extract features from the image 20; the input thereof is the entire image 20, and the output is the extracted features, i.e. the feature map shown in Fig. 4, the output comprising multiple candidate regions (i.e. bounding boxes). Region of interest pooling (ROI pooling) is used to convert bounding boxes of different sizes to the same size, i.e. a uniform image size for output, as this facilitates a subsequent classification task. Another part is classification and regression; this classifies the bounding boxes and can issue final position information. The complete target identification model requires coordination among the constituent parts mentioned above. In the case of a model which has already been trained, it is only necessary to input some images, and all objects on the production line can then be quickly identified. The use of a target identification model can avoid manual input of entities to generate a knowledge graph. It must be explained that Faster-RCNN is merely one example of a target identification model, and other CNN-based models may also be used to identify objects and position information in the image 20.

A relationship between entities may be obtained from the relative positional relationship between objects. For example: in the image 20, the tires and the motor vehicle logo are all within the positional range of the motor vehicle; this means that the motor vehicle may comprise the tires and motor vehicle logo, and the entity "motor vehicle" has the attributes "tires" and "motor vehicle logo". Thus, it is feasible to obtain a relationship between entities from the relative positional relationship between the corresponding objects. Moreover, it is known from experience that images of the same object captured from different angles are significantly different. Position information is very important, but prior knowledge concerning images is also meaningful for reference purposes, and is referred to herein as "common knowledge". Thus, in some embodiments of the present invention, common knowledge and the relative positional relationship between objects may be used to jointly identify the relationship between entities.

In combination with common knowledge 60, in some embodiments of the present invention, the relationship between entities on the production line may be used for reference (as shown in the table below:

| Entity pair (entity couple) | Possible relationship, from Wikipedia | Probability |
|---|---|---|
| (Mechanical arm, motor vehicle) | Control | 0.65 |
| | Supported | 0.29 |
| | Cooperation | 0.06 |
| (Mechanical arm, motor vehicle door) | Mounting | 0.43 |
| | Pushing | 0.41 |
| | Cooperation | 0.09 |
| | Opening | 0.07 |
| (Mechanical arm, tire) | Mounting | 0.51 |
| | Grabbing | 0.49 |
| (Mechanical arm, lamp) | Mounting | 0.49 |
| | Grabbing/moving | 0.42 |
| | Cooperation | 0.08 |
| (Mechanical arm, case) | Grabbing/pushing/placing | 0.42 |
| | On top | 0.31 |
| | Opening | 0.23 |
| (Mechanical arm, steering wheel) | Mounting/adjusting/grabbing | 0.47 |
| | Moving | 0.37 |
| | Operating | 0.13 |
| (Mechanical arm, pillar) | Placed | 0.39 |
| | Supporting | 0.31 |
| | Cooperation | 0.26 |
| (Switch, mechanical arm) | Control/adjustment/opening/closing | 0.52 |
| | Cooperation | 0.13 |
| | Moving | 0.12 |
| (Worker, switch) | Control/adjustment/opening/closing | 0.48 |
| | Having | 0.29 |
| | Moving | 0.23 |
| (Box, rack) | Placed | 0.61 |
| | Supporting | 0.37 |
| (Tire, motor vehicle) | Being a part of... | 0.52 |
| | Supported | 0.48 |
| (Steering wheel, motor vehicle seat) | In front of... | 0.85 |
| (Steering wheel, conveyor belt) | Control/adjustment | 0.49 |
| | Placed | 0.43 |
| (Steering wheel, motor vehicle logo) | Comprising | 0.62 |
| | Control/adjustment | 0.28 |
| (Motor vehicle, Mercedes-Benz) | Brand/belonging to | 0.84 |
| (Motor vehicle, VW) | Brand/logo/belonging to | 0.86 |
| (Motor vehicle, BMW) | Brand/logo/belonging to | 0.81 |
| (Motor vehicle, Audi) | Brand/logo/belonging to | 0.92 |
| (Motor vehicle, Ford) | Brand/logo/belonging to | 0.79 |
| (Motor vehicle, Buick) | Brand/logo/belonging to | 0.94 |
| (Motor vehicle, Bentley) | Brand/logo/belonging to | 0.92 |
| (Motor vehicle, Ferrari) | Brand/logo/belonging to | 0.89 |
| (Motor vehicle, Lamborghini) | Brand/logo/belonging to | 0.93 |
| (Motor vehicle, Rolls Royce) | Brand/logo/belonging to | 0.87 |
| (Motor vehicle, Lexus) | Brand/logo/belonging to | 0.89 |
| (Motor vehicle, Land Rover) | Brand/logo/belonging to | 0.83 |
| | Supporting | 0.57 |
| (Motor vehicle, track) | On top | 0.39 |
| | Cooperation | 0.04 |

Adding the common knowledge 60 enables the entity relationship determining unit 1142 to perform classification on the basis of sufficient core features. An example of the entity relationship determining unit 1142 is an artificial neural network (ANN), used to identify relationships between entities corresponding to objects in the image 20. The input of the ANN comprises the relative positional relationship 42 between objects in the image, and the possible relationship between two entities from the common knowledge 60, and the output is the relationship 42' between entities.

The positional relationship determining module 113 subjects the position information 32 of each object in the image 20 to feature extraction, to obtain the relative positional relationship 42 between objects in the target system, wherein the relative positional relationship 42 (i.e. the extracted features) comprises at least one of the following items of information:
- information on angles between objects;
- distance between center points of candidate regions (bounding boxes) of identified objects;
- relationship between position points of candidate regions of identified objects;
- size of overlap region between candidate regions;
- relative positional relationship between overlap regions, etc.

The items of information mentioned above are very important for discovering relationships between entities. Some new features are defined in the table below:

| Feature | Definition |
|---|---|
| Overlap ratio | Proportion of total candidate region occupied by overlap region |
| Relative position - L (left) | Entity A is at the left side of entity B |
| Relative position - R (right) | Entity A is at the right side of entity B |
| Relative position - U (up) | Entity A is in front of entity B |
| Relative position - D (down) | Entity A is behind entity B |
| Relative distance | Distance between the center of entity A and the center of entity B |

It must be explained that the features that need to be extracted are different in different factories or different technical fields; here, the function of feature extraction in the entire process of determining relationships between entities has been explained by examples.

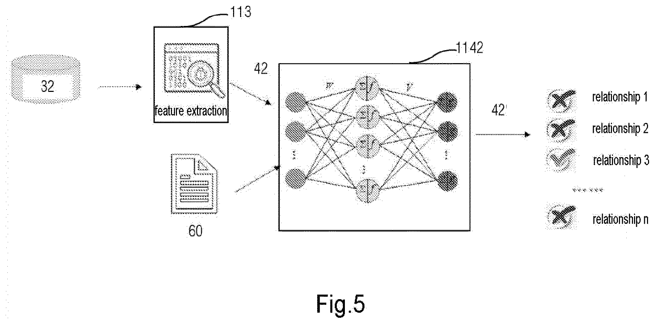

A description is given below of how the entity relationship determining unit 1142 determines relationships between entities on the basis of the common knowledge 60 and extracted features, with reference to Fig. 5. The entity relationship determining unit 1142 may infer relationships between entities by means of an entity relationship prediction model (i.e. the ANN mentioned above). In the image 20, the relationship between the motor vehicle and the tire is that the motor vehicle comprises the tire, the relationship between the motor vehicle and the mechanical arm is that the mechanical arm grabs the motor vehicle, and the two tires are identical entities. Thus, a table comprising entity A, entity B and a relationship between the entities can be obtained, and this table can be outputted by the entity relationship determining unit 1142. Finally, the script can be triggered to automatically connect to a neo4j database, and the knowledge graph 50 is generated on the basis of the table.

It must be explained that the image 20 is used here as an example, but in actual processing, embodiments of the present invention may process a video, because a video may be regarded as being composed of frames of images.

The abovementioned modules comprised in the knowledge graph program 11 may also be realized by hardware, for performing the operations of the apparatus 10 for generating a knowledge graph when performing the method for generating a knowledge graph; for example, control logic of each procedure involved in the method is burned in advance into a field-programmable gate array (FPGA) chip or a complex programmable logic device (CPLD) for example, and these chips or devices perform the functions of the modules described above, wherein the specific manner of implementation may be determined according to engineering practice.

Additionally, the apparatus 10 for generating a knowledge graph may further comprise a communication module 103, for communicating with other devices.

It should be mentioned that embodiments of the present invention may comprise an apparatus having a different architecture from that shown in Fig. 1. The architecture described above is merely exemplary, used for the purpose of explaining the method 200 for generating a knowledge graph as provided in embodiments of the present invention.

The at least one processor 102 may comprise a microprocessor, an application-specific integrated circuit (ASIC), a digital signal processor (DSP), a central processing unit (CPU), a graphical processing unit (GPU), a state machine, etc. Embodiments of computer readable media include but are not limited to floppy disks, CD-ROM, magnetic disks, memory chips, ROM, RAM, ASIC, configured processors, fully optical media, all magnetic tapes or other magnetic media, or any other media from which code can be read by a computer processor. Additionally, various other forms of computer readable media can send or carry code to a computer, including routers, private or public networks, or other wired and wireless transmission devices or channels. The code may comprise code of any computer programming language, including C, C++, C language, Visual Basic, java and JavaScript.

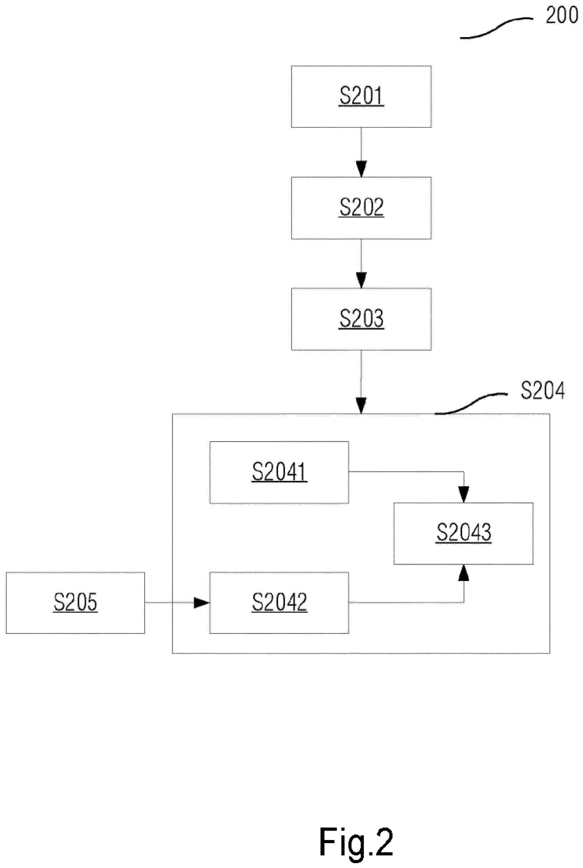

Fig. 2 is a flow chart of a method for generating a knowledge graph as provided in an embodiment of the present invention. The method 200 may be performed by the abovementioned apparatus 10 for generating a knowledge graph, and may comprise the following steps:
- S201: acquiring an image 20 of a target system;
- S202: subjecting the image 20 to target identification to obtain a category 31 of each object in the target system and position information 32 of each object in the image 20;
- S203: determining a relative positional relationship 42 between objects in the target system according to the position information 32 of each object in the image;
- S204: generating a knowledge graph 50 of the target system according to the relative positional relationship 42 and the category 31 of each object identified.

Optionally, step S204 may comprise:
- S2041: determining the categories 31 of the objects identified as being entities in a knowledge graph of the target system;
- S2042: determining a relationship 42' between entities in the knowledge graph corresponding to objects in the target system according to the relative positional relationship 42 between objects;
- S2043: generating the knowledge graph 50 of the target system according to the entities in the knowledge graph of the target system and the relationship between the entities.

In addition, the method may further comprise:
- S205: acquiring common knowledge 60 of a relationship between the identified objects;
- when determining the relationship between entities in the knowledge graph corresponding to objects in the target system according to the relative positional relationship between objects in step S2042, the relationship 42' between entities in the knowledge graph may be determined according to the relative positional relationship 42 between identified objects and the acquired common knowledge 60.

Embodiments of the present invention further provide a computer readable medium, having stored thereon computer readable code; and a computer program product, comprising computer readable code. When executed by a processor, the computer readable code realizes the method 200. Embodiments of computer readable media include floppy disks, hard disks, magneto-optical disks, optical disks (e.g. CD-ROM, CD-R, CD-RW, DVD-ROM, DVD-RAM, DVD-RW, DVD+RW), magnetic tape, non-volatile memory cards and ROM. Optionally, computer readable code may be downloaded from a server computer or cloud via a communication network.

It must be explained that not all of the steps and modules in the structural drawings of systems and procedures above are necessary; some steps or modules may be omitted according to actual needs. The order in which the steps are performed is not fixed, and may be adjusted as needed. The system structures described in the embodiments above may be physical structures or logic structures, i.e. some modules might be realized by the same physical entity, or some modules might be realized by multiple physical entities separately, or may be realized jointly by certain components in multiple independent devices.

## Claims

1. A method (200) for generating a knowledge graph, **characterized by** comprising:
- acquiring (S201) an image (20) of a target system;
- subjecting (S202) the image (20) to target identification to obtain a category (31) of each object in the target system and position information (32) of each object in the image (20);
- determining (S203) a relative positional relationship (42) between objects in the target system according to the position information (32) of each object in the image;
- generating (S204) a knowledge graph (50) of the target system according to the relative positional relationship (42) and the category (31) of each object identified.

2. The method as claimed in claim 1, **characterized in that** the step of generating (S204) a knowledge graph (50) of the target system according to the relative positional relationship (42) and the category (31) of each object identified, comprises:
- determining (S2041) the categories (31) of the objects identified as being entities in a knowledge graph of the target system;
- determining (S2042) a relationship (42') between entities in the knowledge graph corresponding to objects in the target system according to the relative positional relationship (42) between objects;
- generating (S2043) the knowledge graph (50) of the target system according to the entities in the knowledge graph of the target system and the relationship between the entities.

3. The method as claimed in claim 1, **characterized in that**
- the method further comprises: acquiring (S205) common knowledge (60) of a relationship between the identified objects;
- the step of determining (S2042) a relationship between entities in a knowledge graph corresponding to objects in the target system according to the relative positional relationship between objects, comprises: determining a relationship (42') between entities in the knowledge graph according to the relative positional relationship (42) between identified objects and the acquired common knowledge (60).

4. The method as claimed in claim 1, the target system being a factory, a production line or a processing step.

5. An apparatus (10) for generating a knowledge graph, **characterized by** comprising:
- an image acquisition module (111), configured to acquire an image (20) of a target system;
- a target identification module (112), configured to subject the image (20) to target identification to obtain a category (31) of each object in the target system and position information (32) of each object in the image (20);
- a positional relationship determining module (113), configured to determine a relative positional relationship (42) between objects in the target system according to the position information (32) of each object in the image;
- a knowledge graph generating module (114), configured to generate a knowledge graph (50) of the target system according to the relative positional relationship (42) and the category (31) of each object identified.

6. The apparatus (10) as claimed in claim 5, **characterized in that** the knowledge graph generating module (114) comprises: an entity relationship determining unit (1142) and a knowledge graph generating unit (1141),
- the entity relationship determining unit (1142) is configured to determine a relationship (42') between entities in a knowledge graph corresponding to objects in the target system according to the relative positional relationship (42) between objects;
- the knowledge graph generating unit (1141) is configured to determine the categories (31) of the objects identified as being entities in a knowledge graph of the target system, and generate the knowledge graph (50) of the target system according to the entities in the knowledge graph of the target system and the relationship (42') between the entities.

7. The apparatus (10) according to claim 5, **characterized in that**
- the apparatus further comprises: a common knowledge acquisition module (115), configured to acquire common knowledge (60) of a relationship between the identified objects;
- the entity relationship determining unit (1142) is specifically configured to determine a relationship (42') between entities in a knowledge graph according to the relative positional relationship (42) between identified objects and the acquired common knowledge (60).

8. The apparatus (10) as claimed in claim 5, the target system being a factory, a production line or a processing step.

9. An apparatus (10) for generating a knowledge graph, **characterized by** comprising:
at least one memory (101), configured to store computer readable code;
at least one processor (102), configured to call the computer readable code, and perform the steps of the method as claimed in any one of claims 1 - 4.

10. A computer readable medium, **characterized in that** the computer readable medium has stored thereon computer readable code which, when executed by a processor, causes the processor to perform the steps of the method as claimed in any one of claims 1 - 4.

11. A computer program product, comprising computer readable code, **characterized in that** the computer readable code, when executed by a processor, realizes the steps of the method as claimed in any one of claims 1 - 4.
